# EUROPEAN PATENT APPLICATION

(11) **EP 1 574 953 A1**
(43) Date of publication of application: **14.09.2005**
(21) Application number: 03023941.2
(22) Date of filing: 22.10.2003
(51) Int. Cl.: G06F 9/46

(54) **Asynchronous consumption of independent planned requirements**

(71) Applicant: SAP Aktiengesellschaft, 69190 Walldorf (DE)
(72) Inventor: John, Thomas, 69469 Weinheim (DE)

(57) **Abstract**

The invention relates to demand planning. The demand forecasts include planned independent requirements. These are planned requirement quantities for a finished product in a period of time, which are not based on sales orders. Depending on the requirements type, the quantity of planned independent requirements is reduced by the quantity of incoming sales orders. This so called consumption of planned independent requirements is triggered by inbound sales orders. By separation of the incoming sales orders and the consumption of planned independent requirements, problems accessing the database are avoided. Consumption queues are generated from incoming sales orders. Different items in a sales order may be assigned to different consumption queues. Therefore a plurality of consumption queues may be processed in parallel.

## Description

### Field of the Invention

The invention relates to demand planning.

### Background of the Invention

Within Enterprise resource planning software (ERP) the component Demand planning (DP) allows to forecast market demands for the enterprises' products and to produce a demand plan, accordingly.

Usually Demand Planning provides a data area to store and maintain the information necessary for the demand planning process. The use of this information along with user-defined planning layouts and interactive planning books, enables people from different departments to be integrated into the forecasting process. Statistical forecasting and advanced macro techniques allow creating forecasts based on demand history as well as any number of causal factors, and use a consensus-based approach to consolidate the results. Marketing intelligence and management adjustments can be added by using forecast overrides and promotions.

Usually, the forecasts include planned independent requirements. These are planned requirement quantities for a finished product in a period of time, which are not based on sales orders. Between subsequent planning processes a comparison of planned independent requirement quantities with the requirement quantities from customer requirements may take place. Depending on the requirements type, the quantity of planned independent requirements may get reduced by the quantity of incoming sales orders. This so called consumption of planned independent requirements is triggered by inbound sales orders and is processed online. To disable parallel consumption of the same planned independent requirement by different inbound sales orders a database lock is set on the requirement by the first accessing sales order. The lock is released when processing has finished.

When several sales orders with identical customer requirements or location products arrive at the same time, which will trigger the consumption of the same planned independent requirement, a lock problem may occur. As a result the system must repost the sales orders repeatedly until the lock problem gets resolved.

### Brief Summary of the Invention

By separation of processing of the incoming sales orders and the consumption of planned independent requirements, the database lock is avoided. Consumption queues are generated from incoming sales orders. Different requirements in a sales order may be assigned to different consumption queues. Therefore a plurality of consumption queues may be processed in parallel. A change indicator to ensure planning consistency may prevent the start of a planning process without the consumption queues for associated requirements being fully processed.

Details of one or more implementations are set forth in the accompanying drawings and the description below. Other features and advantages may be apparent from the description, the drawings, and the claims.

### Brief Description of the Drawings

Figure 1 shows schematically an exemplary system landscape provided to carry out the invention.
Figure 2 is a flowchart showing the process.
Figure 3 is a diagram showing the timeline of inbound sales orders.
Figure 4 is a diagram showing the timeline of process with a single sales order including a single requirement.
Figure 5 is a diagram showing the timeline of a consumption process with two inbound sales orders.
Figure 6 is a second diagram showing the timeline of a consumption process with two inbound sales orders.
Figure 7 Figure 7 is a diagram showing the timeline in a process with a planning task running in parallel to an inbound sales order.
Figure 8 shows chart depicting the consumption of a queue and a parallel planning task.

### Detailed Description of the Invention

Referring now to the drawings, in which like numerals represent like elements throughout the several figures, aspects of the present invention and the exemplary operating environment will be described.

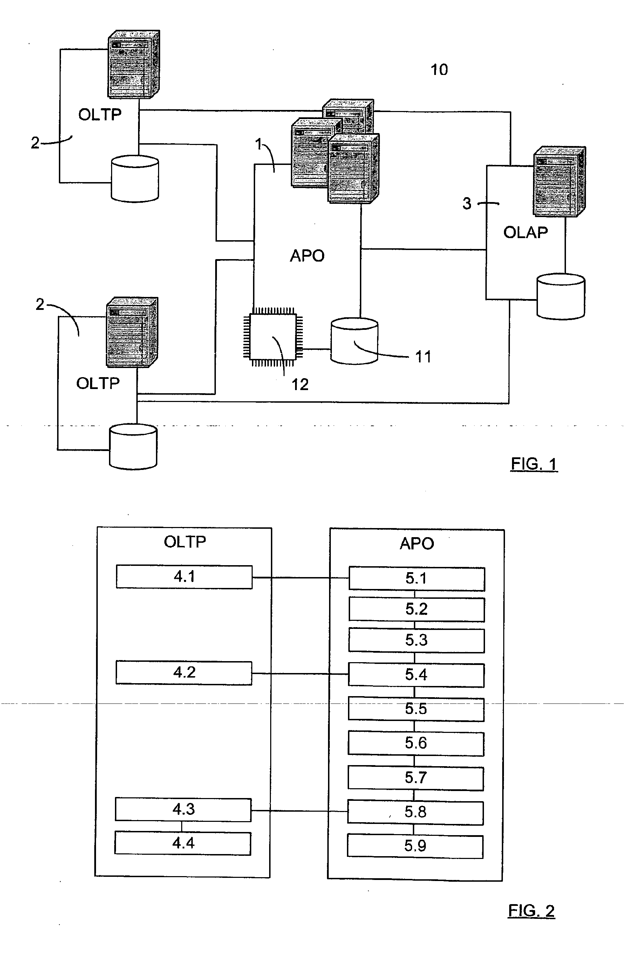

Figure 1 shows schematically the substantial components of an exemplary system landscape to carry out the invention. It consists of an Advanced Planner and Optimizer System 1 and an Online Transaction Processing System 2. Usually an Online Analysis Processing System 3 is also included.

The Advanced Planner and Optimizer System 1, also referred to as APO, consists of several software components: a relational database system 1.1 known as the APO DB; a separate, very fast object-oriented database called liveCache 1.2; an SAP R/3 Basis; the APO application programs; and a number of programs that execute elaborated optimization algorithms, called the optimizers. These components may run on the same or on different servers.

Livecache is a tool for processing large volumes of data in main memory, enabling data sharing among several applications. Livecache has a very large main memory, behaves like an object oriented and relational database, stores data in optimized structures, allows concurrent data access and leverages parallel and distributed processing using multi-processor and multi-computer technology.

In addition to "real, actual, live data" Livecache provides so-called simsessions. Simsessions use a copy of real data as a working basis to execute for example planning or optimization tasks without tempering with the real data. Only the results may get copied or merged to the real data in the db. Different simsessions may be processed in parallel

The Online Transaction Processing System 2 covers functionality for sales and distribution, material and inventory management, controlling, shop floor control, logistic execution and so on. There may be more than one Online Transaction Processing System, which may run on different servers.

The optional Online Analysis Processing System 3, such as a Business Warehouse System, provides cumulated historical data that may serve as a basis for extrapolation purposes in planning processes.

Figure 2 is a flow chart showing the planning process using queued consumption of planned independent requirements. It also shows the collaboration of the APO system 1 with the OLPT system 2. In a first step 4.1 master data and integration model are set up in the OLTP system 1. This step may require the interaction with a professional user of the system. In a second step the master data are transferred to the APO system 2 and used to set up the master data in the APO system in step 5.1. The master data in the APO system together with more information gathered by further user interaction provide the basis for creating a demand plan at finished product level (or requirement level) in step 5.2. Finally in the next step 5.3 the demand plan is released to Supply Net planning / Production Planning - detailed scheduling SNP/PP-DS.

After the demand plan has been released, sales orders, which were created in or received by the OLTP system 1, get transferred the APO System 2 in step 4.2. For each customer requirement contained in the sales order a queued consumption task and a consumption counter is created in step 5.5. The consumption counter acts as a change indicator indicating the status of the corresponding queued consumption task. The queued consumption tasks are processed depending on system load and number of exiting processes.

The queued consumption tasks are created using a V2 Update module, which is called by incoming sales orders. Each queued consumption task is given the name of the associated requirement. Each sales order triggers a distinctive number of queued consumption tasks depending on the number of requirements in the sales order.

The start of a SNP/PP-DS display task or a planning task 5.6 within the APO system 2 requires a check of the change indicators. For each involved requirement the consumption counters must get checked in step 5.7. To produce consistent results any display or planning task has to assure that for every processed sales order the consumption of planned independent requirements is accounted for before the start of the respective display or planning task 5.8.

The SNP/PP-DS display or planning task will eventually result in a production order 4.3 and finally in a goods issue at finished level 4.4 in the OLTP system. In the APO system a reduction of the forecast at finished product level by the sales order items is achieved when all queued consumption tasks are fully processed.

Since the consumption of planned independent requirements in step 5.8 took place on a local level, the global calculation is done in a separate process step 5.9.

Figure 3 is a diagram showing the timeline of inbound sales orders. Inbound sales orders SO, which may be single or queued, trigger the input process at time t1 in the APO System, which in turn creates a consumption counter CC1, CC2 in the database at a second time t2 for each item included by the sales order. In parallel queued consumption tasks QT1, QT2 are generated and the corresponding consumption counters CC1, cc2 are set to a first value. The first value usually equals 1. Any other value that distinctively discriminates the first value may be used instead. The queued consumption tasks QT1, QT2 waiting to be processed have their associated consumption counters CC1, CC2 set to the first value, which indicates that consumption of planned independent requirements CR for respective items has to be performed.

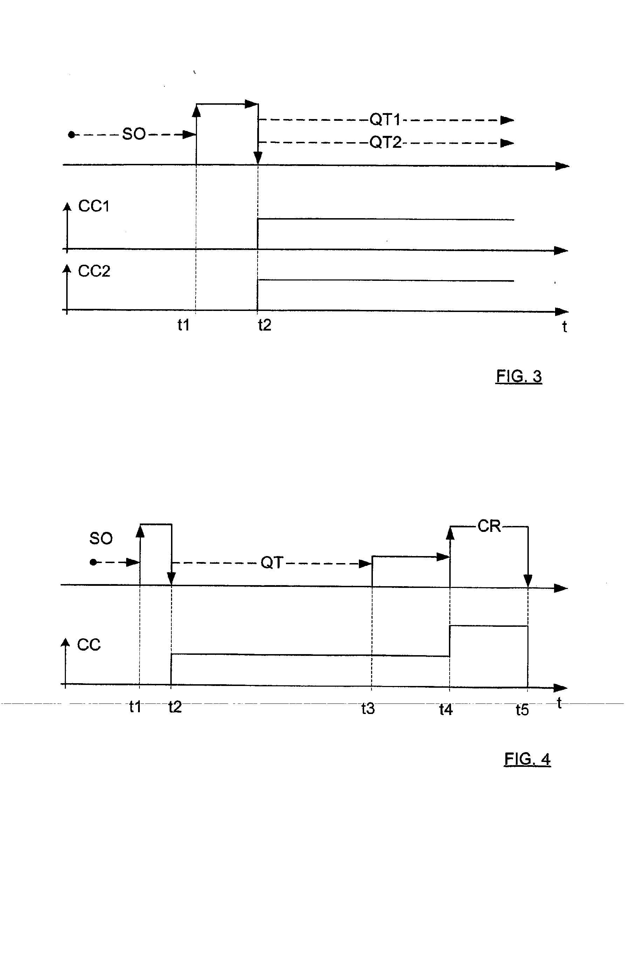

Figure 4 is a diagram showing the timeline of a process including a single sales SO order with a single requirement. When the input process opens the sales order at t1, the dedicated consumption counter CC is created and set to zero. Then the input process creates a queued consumption task QT at t2, sets the consumption counter CC to its first value indicating that the assigned queue is waiting to be processed and finally exits. Eventually the queued consumption task runs at t3. The consumption counter CC is set to a second value when forecast consumption actually is executed at t4. When the forecast consumption is fully processed at t5, the consumption counter CC is set to its third value. This procedure describes the process in a rather simplified form. In reality a single sales order may include many different requirements and thus create many queued consumption tasks, one for every requirement, each queue having its associated consumption counter.

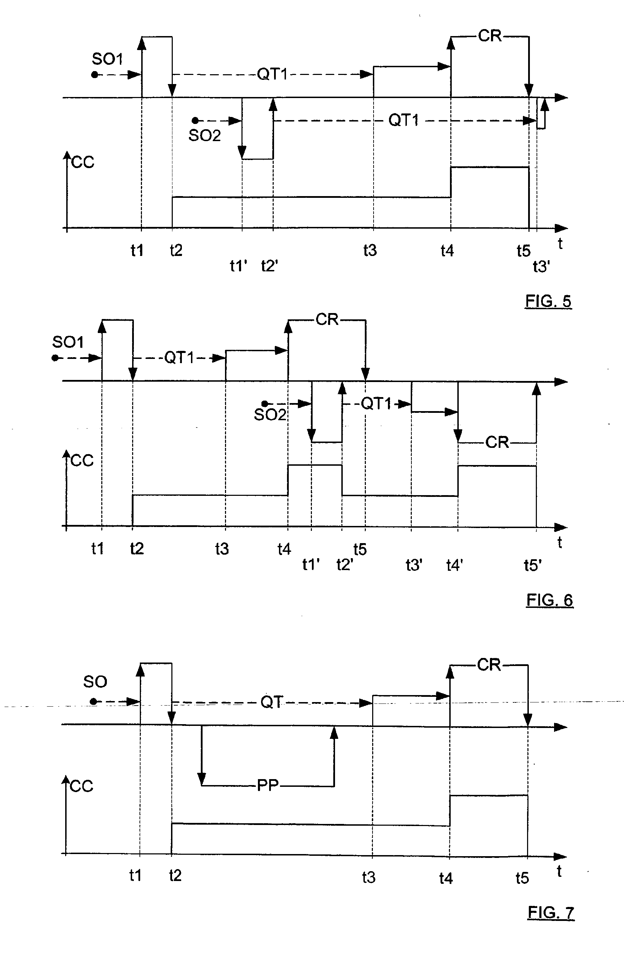

Figure 5 is a diagram showing the timeline of a consumption process with two inbound sales orders SO1, SO2, which are transferred successively into the APO system at different times t1, t1'. After the input process of the first sales order SO1 has created a first queued task QT1 at t1, the input process is completed and exits. When the second sales order SO2 arrives at t1', the input process processes it and creates a second queued task QT1, e.g. the items are converted to respective queued tasks. In the example according to Figure 5 this happens before the forecast consumption for items of the queued task related to the first sales order SO1 is executed at t4, e.g. the counter is still having its first value. The forecast consumption run CR will process all requirements added to the queued task QT1 by QT2 and the corresponding counter gets reset to the third value t5. The second queued task will find the counter reset at t3' and immediately exits.

Figure 6 is a second diagram showing the timeline of a consumption process with two inbound sales orders SO1, SO2, which are transferred successively into the APO system. Both sales orders will create queued tasks QT1, QT2 for the same requirement as described before referring to Figure 5. According to Figure 6 the second inbound sales order is transferred to the APO System at a time t1' when the queued consumption task for the first sales order is already being processed (e.g. t1' > t4) and consumption counter CC is set to its third value. Since both sales orders include the same requirement, they are accessing the identical consumption counter CC. Therefore the input process for the second sales order SO2 resets the consumption counter CC to its first value when exiting at t2'. Now when the forecast consumption task CR for the first sales order finishes, the consumption counter cannot be set to its third value, because it is not in the state the consumption task expects it to be, e.g. having the second value. The consumption counter CC remains at its second value, which indicates the consumption for the respective location product or requirement has still to be performed. Finally at t4' a second forecast consumption run CR will process the requirements according to the second sales order SO2 and restores the consumption counter at t5'.

Figure 7 is a diagram showing the timeline in a process with a planning task running in parallel to an inbound sales order. The planning run PP starts after inbound sales order SO has been processed and a queued consumption task QT already been created at t2, and before it being processed at t4. To assure that the planning task is in consistence with sales order data it is essential that all inbound sales orders are considered by the planning run PP. To achieve this the consumption is calculated by the planning run PP for all respective products or requirement with the associated consumption counter CC being set. The planning task PP has to check the consumption counter CC for every item requirement covered by the planning run PP. The consumption of independent requirements is performed before the actual planning task is started and is performed in the data space of the planning run only. There is no resetting the counter by the planning task. The queued consumption task CR will run anyway at t4 and thereby reset the counter at t5.

Only the forecast consumption task CR triggered by a queued consumption task QT will reset the corresponding consumption counter CC. Any consumption calculation within planning tasks are done locally and have no impact on consumption counters CC or on forecast consumption tasks CR. Thus problems with database locks are circumvented and planning consistency is guaranteed.

A number of embodiments of the invention have been disclosed. Nevertheless, it will be understood that various modifications can be made without departing from the spirit and scope of the invention. For example, the planning process may be performed on a system other than DP/PP. Accordingly other embodiments are within the scope of the following claims.

## Claims

1. Method for controlling a process flow in a data processing system, the process comprising two successive sub processes, wherein the first sub process initiates the second sub process, which locks elements in a database for exclusive access while accessing the elements, **characterized in that** the first sub process creates a queued task for the second sub process so that the first sub process can be completed independently from the execution of the second sub process.

2. The method of claim 1, wherein for each element or group of elements in the database, which will get locked by the second sub process, a separate queued task is started by the first sub process.

3. The method of claim 2, wherein for each element or group of elements in the database a counter element is created, which indicates the status of the corresponding queued task.

4. The method of claim 3, wherein each counter element may have 3 states.

5. The method of claim 4, wherein the counter element is set to its initial state when the corresponding queued task is created.

6. The method of claim 4, wherein the counter element is set to its second state when corresponding queued task is executed.

7. The method of claim 4, wherein the counter element is set to its third state when corresponding queued task is completed.

8. The method of claim 7, wherein a further process has to internally update the elements or the group of elements in the database when the respective counters are not in their third state.

9. Method of controlling the consumption of planned independent requirements by customer requirements of inbound sales orders in an electronic planning system, the method including the steps of:
receiving inbound sales orders, each consisting of customer requirements,
assigning the customer requirements to consumption queues,
setting a change indicator for each consumption queue indicating that the queue has to be processed,
resetting the change indicator when respective consumption queue has been processed.

10. The method of claim 9 wherein the change indicator has 3 values.

11. The method of claim 10, wherein the change indicator is set to its initial state when the corresponding consumption queue is created.

12. The method of claim 10, wherein the change indicator is set to its second state when corresponding consumption queue is executed.

13. The method of claim 10, wherein the change indicator is set to its third state when corresponding consumption queues is completed.

14. Computer program product comprising program code means stored on a computer readable medium for performing the method of any one of the claims 1 to 13 when the program is run on a computer.

15. An article comprising a computer readable medium that stores executable instructions causing a computer system to perform the method of any one of the claims 1 to 13.
